Europäisches Patentamt

European Patent Office

Office européen des brevets

(11) Veröffentlichungsnummer: **0 041 097**
**B1**

(12) **EUROPÄISCHE PATENTSCHRIFT**

(45) Veröffentlichungstag der Patentschrift:
12.09.84

(51) Int. Cl.³: **H 01 B 7/08,** H 01 B 13/10,
G 02 B 5/14

(21) Anmeldenummer: **81100940.6**

(22) Anmeldetag: **11.02.81**

(54) **Bandkabel.**

(30) Priorität: **30.05.80 DE 3020622**

(43) Veröffentlichungstag der Anmeldung:
**09.12.81 Patentblatt 81/49**

(45) Bekanntmachung des Hinweises auf die Patenterteilung:
**12.09.84 Patentblatt 84/37**

(84) Benannte Vertragsstaaten:
**AT BE CH DE FR GB IT LI LU NL SE**

(56) Entgegenhaltungen:
**CH - A - 523 579**
**DE - A - 2 427 150**
**DE - A - 2 644 252**
**DE - B - 2 907 777**
**US - A - 3 219 752**
**US - A - 3 735 022**

(73) Patentinhaber: **W.L. GORE & ASSOCIATES, INC.,**
**555 Paper Mill Road P.O. Box 9329, Newark**
**Delaware 19711 (US)**

(72) Erfinder: **Tillmanns, Ralph, Eichenstrasse 5,**
**D-8201 Schönau (DE)**
Erfinder: **Sieberling, Bernd, Wendelsteinstrasse 18,**
**D-8022 Grünwald (DE)**
Erfinder: **Hill, Ronald, BLumenstrasse 13,**
**D-8011 Harthausen (DE)**

(74) Vertreter: **Altenburg, Udo, Dipl.-Phys. et al, Patent- und**
**Rechtsanwälte Bardehle-Pagenberg-Dost-Altenburg &**
**Partner Postfach 86 06 20, D-8000 München 86 (DE)**

## Beschreibung

Die Erfindung betrifft ein Kabel mit einer Zweitschichtisolierung gemäss Oberbegriff des Anspruchs 1.

Bei bekannten Kabeln, z.B. mit einer Isolierung aus vollverdichtetem Polytetrafluoräthylen (vgl. z.B. DE–B–1404370) ergeben sich bei der Kontaktierung von Durchdrück-Steckverbindern (ID-C=Isulation Displacement Connector) häufig Schwierigkeiten. Diese beruhen darauf, dass der Rasterabstand der einzelnen Leiter nicht mit der erforderlichen Genauigkeit eingehalten ist, so dass die Kontaktzungen der Durchdrück-Steckverbinder entweder gar nicht mit den Leitern in Berührung kommen oder diese durchschneiden. Darüberhinaus sind diese bekannten Bandkabel mit einer Isolierung aus vollverdichtetem Polytetrafluoräthylen relativ hart und steif, so dass der Einsatz dieser Bandkabel auf Gebieten, auf welchen eine erhöhte Flexibilität der Kabel erforderlich ist, Schwierigkeiten und Unzulänglichkeiten mit sich bringt.

Aus der US–A–3219752 ist ein Duplex-Kabel mit einer Zweischichtisolierung bekannt, welche eine innere, die Leiter unmittelbar umgebende Isolierschicht aus geschlossenzelligem Polyäthylenschaumstoff und eine äussere, die innere Isolierschicht umgebende und die Leiter untereinander verbindende Isolierschicht aus Polyäthylen hoher Dichte aufweist. Bei Duplex-Kabeln werden keine Durchdrück-Steckverbinder eingesetzt. Unabhängig davon würde jedoch der zweitschichtige Aufbau der bekannten Isolierung auch keine zufriedenstellende Kontaktierung von Durchdrück-Steckverbindern aufgrund der sehr geringen Komprimierbarkeit der geschlossenen Zellen ermöglichen. Diese geringe Komprimierbarkeit wird jedoch in der US–A–3219752 gerade gezielt ausgenutzt, um einerseits eine Zerstörung der Zellenwände beim Anklemmen der Kabel zu verhindern und um andererseits eine gute Zugentlastung des Kabels aufgrund des grossen Widerstandes der geschlossenen Zellen beim Anklemmen zu erzielen.

Die Aufgabe der vorliegenden Erfindung besteht darin, die Unzulänglichkeiten der bekannten Kabel zu vermeiden und ein flexibles Bandkabel zu schaffen, das einfach herstellbar und kontaktsicher mit Durchdrück-Steckverbindern verbindbar ist.

Diese Aufgabe wird bei einem Kabel der im Oberbegriff des Anspruchs 1 genannten Art erfindungsgemäss durch die Merkmale des kennzeichnenden Teils des Anspruchs 1 gelöst. Das poröse expandierte Polytetrafluoräthylen kann hierbei mit Hilfe eines Verfahrens hergestellt werden, wie es z.B. in der DE–B–2123316 beschrieben ist.

Das erfindungsgemässe Bandkabel kann selbstjustierend und kontaktsicher mit Durchdrück-Steckverbindern verbunden werden, da das weiche poröse expandierte Polytetrafluoräthylen es dem Leiter erlaubt, einen geringfügigen Versatz zu den Kontaktzungen der Steckverbinder auszugleichen. Falls die Kontaktzungen der Steckverbinder nämlich beim Steckvorgang auf die Leiter auftreffen, können die Leiter unter Zurückdrücken der weichen inneren Isolierschicht an den Kontaktzungen abgleiten, wobei sich aufgrund der Elastizität der Kontaktzungen ein sehr guter mechanischer und elektrischer Kontakt mit den Leitern ergibt. Darüberhinaus sind die erfindungsgemässen Kabel äusserst flexibel, was die Einsatzmöglichkeiten der Kabel erheblich erweitert, z.B. für bewegliche elektronische Geräteteile, die häufig hin- und herbewegt werden müssen.

Das erfindungsgemässe Bandkabel ist ausserdem sehr leicht z.B. ca. 30 Gew.-% leichter gegenüber einem Bandkabel mit einer vollständigen Isolierung aus vollverdichtetem Polytetrafluoräthylen. Aufgrund der geringen effektiven Dielektrizitätskonstante des porösen expandierten Polytetrafluoräthylen von ca. 1,3 haben die erfindungsgemässen Bandkabel günstige Kapazitäts- und Impedanzwerte. Hierbei ist zu berücksichtigen, dass die innere Isolierschicht aus porösem expandiertem Polytetrafluoräthylen im Bereich grösserer Feldstärken liegt.

Schiesslich kann das erfindungsgemässe Bandkabel auch ohne Schwierigkeiten verlötet werden, wobei die weiche innere Isolierschicht die Bruchgefahr an der Übergangsstelle zwischen dem Leiter und der Isolation erheblich reduziert.

Da die innere Isolierschicht aus porösem expandiertem Polytetrafluoräthylen mit z.B. über 50 Volumenprozent Luftanteil auch ein guter Wärmeisolator ist, können als Leiter beim erfindungsgemässen Kabel auch kostengünstige reine Kupferleiter oder verzinnte Kupferleiter im Gegensatz zu versilberten Kupferleitern verwendet werden. Die nur relativ kurze Beaufschlagung des erfindungsgemässen Bandkabels mit der Sintertemperatur des porösen expandierten Polytetrafluoräthylen von über ca. 327°C, was ausserdem die Fertigungszeit des Bandkabels vorteilhaft verkürzt, hat insoweit keinerlei schädliche Folgen. Es wird angemerkt, dass Leiter aus Metall, z.B. Kupfer, oder Metallegierungen, z.B. Kupferlegierungen, oder auch aus nicht metallischen Werkstoffen, z.B. Lichtleitfasern aus Kunststoff oder Glas, für Bandkabel an sich bekannt sind (vgl. z.B. US–A–3219752 und DE–A–2427150).

Das erfindungsgemässe Bandkabel kann in vorteilhafter Weise in einem einstufigenkontinuierlichen Verfahren dadurch hergestellt werden, dass die Leiter zwischen zwei inneren Folien aus porösem expandiertem Polytetrafluoräthylen und zwischen zwei äusseren Folien aus vollverdichtetem Polytetrafluoräthylen durch Zusammenführen dieser Elemente in einem Walzenspalt unter Pressen eingebettet werden und das Kabel anschliessend gesintert wird. Hierbei wird durch das Pressen im Walzenspalt und das anschliessende Sintern ein einheitlicher Verbindungssteg zwischen den einzelnen Leitern aus vollverdichtetem Polytetrafluoräthylen hergestellt. Nähere Einzelheiten dieser Herstellungstechnik von Bandkabeln sind z.B. in der DE–C–1640163 beschrieben.

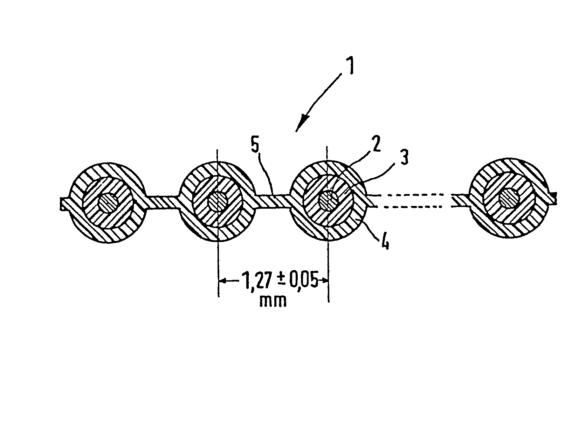

In der einzigen Figur ist schematisch der Querschnitt des erfindungsgemässen Bandkabels gezeigt. Das Bandkabel 1 weist Leiter 2 auf, die z.B. einen Rasterabstand untereinander von 1,27 ± 0,05 mm aufweisen. Die Leiter 2 sind beispielsweise reine Kupferleiter oder verzinnte Kupferleiter. Die Leiter 2 sind jeweils von einer inneren weichen Isolierschicht 3 aus porösem expandiertem Polytetrafluoräthylen umgeben. Diese innere Isolierschicht 3 wird von einer äusseren relativ harten Isolierschicht 4 aus vollverdichtetem Polytetrafluoräthylen umgeben, welche Verbindungsstege 5 zwischen den Leitern 2 bildet.

## Patentansprüche

1. Kabel mit einer Zweischichtisolierung, welche eine innere, die Leiter (2) unmittelbar umgebende Isolierschicht (3) aus einem porösen Material und eine äussere, die innere Isolierschicht (3) umgebende und die Leiter (2) untereinander verbindende Isolierschicht (4) aus einem dichten Material aufweist, dadurch gekennzeichnet, dass das Kabel ein Bandkabel (1) ist und dass zur kontaktsicheren Verbindung mit Durchdrück-Steckverbindern die innere Isolierschicht (3) aus porösem expandiertem Polytetrafluoräthylen und die äussere Isolierschicht (4) aus vollverdichtetem Polytetrafluoräthylen besteht.

2. Kabel nach Anspruch 1, dadurch gekennzeichnet, dass das poröse expandierte Polytetrafluoräthylen über 50 Volumenprozent Luft enthält.

3. Kabel nach Anspruch 1 oder 2, dadurch gekennzeichnet, dass die Leiter (2) aus Metall, z.B. Kupfer, oder Metallegierungen, z.B. Kupferlegierungen, oder auch aus nichtmetallischen Werkstoffen, z.B. Lichtleitfasern aus Kunststoff oder Glas, bestehen.

4. Verfahren zur Herstellung eines Kabels gemäss einem der Ansprüche 1 bis 3, dadurch gekennzeichnet, dass die Leiter zwischen zwei inneren Folien aus porösem expandiertem Polytetrafluoräthylen und zwischen zwei äusseren Folien aus vollverdichtetem Polytetrafluoräthylen durch Zusammenführen dieser Elemente in einem Walzenspalt unter Pressen eingebettet werden und das Kabel anschliessend gesintert wird.

5. Verfahren nach Anspruch 4, dadurch gekennzeichnet, dass durch das Pressen im Walzenspalt und das anschliessende Sintern ein einheitlicher Verbindungssteg zwischen den einzelnen Leitern aus vollverdichtetem Polytetrafluoräthylen hergestellt wird.

## Claims

1. A cable having a two-layer insulation comprising an inner isulation layer (3) surrounding directly the conductors (2) and made of a porous material and an outer insulation layer (4) surrounding the inner insulation layer (3) and connecting the conductors (2) with each other and made of a solid material characterized in that the cable is a ribbon cable (1) and that for the contact safe connection with insulation displacement connectors the inner insulation layer (3) is made of porous expanded polytetrafluoroethylene and the outer insulation layer (4) is made of full density polytetrafluoroethylene.

2. A cable according to claim 1, characterized in that the volume percent of air in the porous expanded polytetrafluoroethylene is greater than 50 percent.

3. A cable according to claim 1 our 2, characterized in that the conductors (2) are made of metal, for example copper, or metal alloys, for example copper alloys, or of non-metallic materials, for example light conducting filaments of plastics or glass.

4. Method for producing a cable according to one of claims 1 to 3, characterized in that the conductors are embedded under pressing between two inner films of porous expanded polytetrafluoroethylene and between two outer films of full density polytetrafluoroethylene by joining those elements in a roll gap and in that the cable is sintered hereafter.

5. Method according to claim 4, characterized in that by the pressing in the roll gap and the subsequent sintering a uniform connection web of full density polytetrafluoroethylene is formed between the different conductors.

## Revendications

1. Câble comportant une isolation à deux couches comprenant une couche isolante interne (3) en un matériau poreux entourant directement les conducteurs (2) et une couche isolante externe (4) en un matériau dense qui entoure la couche isolante interne (3) et relie entre eux les conducteurs (2), caractérisé par le fait que le câble est un câble ruban (1); et par le fait que, en vue d'établir une liaison à contact assuré avec des fiches de connexion enfoncées à force, la couche isolante interne (3) consiste en du polytétrafluoréthylène poreux expansé et la couche isolante externe (4) est en polytétrafluoréthylène intégralement comprimé.

2. Câble selon la revendication 1, caractérisé par le fait que le polytétrafluoréthylène poreux expansé renferme plus de 50 pour cent en volume d'air.

3. Câble selon la revendication 1 ou 2, caractérisé par le fait que les conducteurs (2) consistent en un métal, par exemple du cuivre, ou bien en des alliages de métaux, par exemple des alliages de cuivre, ou bien encore en des matériaux non métalliques, par exemple des fibres optiques en matière plastique ou en verre.

4. Procédé de fabrication d'un câble selon l'une des revendications 1 à 3, caractérisé par le fait que les conducteurs sont noyés entre deux feuilles internes en polytétrafluoréthylène poreux expansé et entre deux feuilles externes en polytétrafluoréthylène intégralement comprimé, en pressant conjointement ces éléments dans un intervalle séparant des cylindres, après quoi le câble est fritté.

5. Procédé selon la revendication 4, caractérisé par le fait que la compression dans l'intervalle entre cylindres et le frittage consécutif forment une nervure monobloc de liaison entre les conducteurs individuels en polytétrafluoréthylène intégralement comprimé.